# FASCICULE DE BREVET EUROPEEN

(11) **EP 3 664 377 B1**
(45) Date de publication et mention de la délivrance du brevet: **21.07.2021**
(21) Numéro de dépôt: 19213257.9
(22) Date de dépôt: 03.12.2019
(51) Int. Cl.: H04L 12/26, H04L 29/06

(54) **PROCÉDÉ ET DISPOSITIF DE MESURE D'UN PARAMÈTRE REPRÉSENTATIF D'UN TEMPS DE TRANSMISSION DANS UN TUNNEL DE COMMUNICATION CHIFFRÉ**
VERFAHREN UND VORRICHTUNG ZUR MESSUNG EINES PARAMETERS, DER DIE ÜBERTRAGUNGSZEIT AUF EINEM EINGESCHRIEBENEN TUNNEL DARSTELLT
METHOD AND DEVICE FOR MEASURING A PARAMETER REPRESENTATIVE OF THE TRANSMISSION TIME ON AN ENCRYPTED TUNNEL

(30) Priorité: 03.12.2018 FR 1872217
(43) Date de publication de la demande: 10.06.2020
(73) Titulaire: Thales, 92400 Courbevoie (FR)
(72) Inventeur: PHEMIUS, Kévin, 92230 GENNEVILLIERS (FR); BOUET, Mathieu, 92230 GENNEVILLIERS (FR); CONAN, Vania, 92230 GENNEVILLIERS (FR)
(74) Mandataire: Lavoix

(56) Documents cités:
- WO-A1-2014/026050
- FR-A1- 2 949 934
- FR-A1- 2 965 995

## Description

La présente invention concerne un procédé et un dispositif de mesure d'un paramètre représentatif d'un temps de transmission dans un tunnel de communication chiffré adapté à transporter des données chiffrées dans des paquets.

L'invention se situe dans le domaine du contrôle du trafic dans les réseaux de communications, et en particulier dans les réseaux sécurisés pour lesquels un chiffrement est utilisé.

En particulier, l'invention s'applique pour des tunnels chiffrés entre des sous-réseaux privés, par exemple des enclaves VPN (pour « *Virtual Private Network* »). Le trafic réseau entrant et sortant de tels sous-réseaux est chiffré/déchiffré. Les paquets qui transitent sur le tunnel de communication chiffré sont également chiffrés. Un exemple se trouve dans WO 2014/026050.

Pour de nombreuses applications utilisant les réseaux de communication, il est critique d'évaluer des paramètres de performance du réseau, par exemple un paramètre représentatif d'un temps de transmission dans le réseau, comme la latence ou le temps d'aller-retour d'un paquet entre deux équipements du réseau, ou la gigue qui est la variation de la latence dans le temps. En anglais, le temps d'aller-retour est désigné par l'abréviation RTT (pour « round trip time »). La latence (ou le RTT) et la gigue sont en particulier critiques pour des applications mettant en œuvre des données qui doivent être synchronisées.

Il n'est pas aisé d'estimer des paramètres de performance représentatifs d'un temps de transmission du réseau dans les parties de réseau chiffrés, par exemple les tunnels de communication chiffrés décrits brièvement ci-dessus.

Une première approche possible pour l'évaluation de tels paramètres, connue pour tout type de réseau de communication, serait d'injecter du trafic spécifique pour mesurer la latence et la gigue d'un tunnel de communication chiffré. Une telle solution n'est cependant pas satisfaisante car le fait d'injecter des paquets spécifiques pour l'évaluation de la latence induit une augmentation du trafic sur le réseau et par conséquent, peut également augmenter la latence du réseau. De plus, dans certains réseaux de communication les liens de communication sont coûteux et/ou contraints, par exemple dans la communication par satellite. Dans de tels cas, l'augmentation du trafic sur le réseau n'est pas envisageable.

Une deuxième approche pour estimer la latence d'un réseau de communications consiste à effectuer une mesure passive en utilisant des paquets générés par des applications utilisatrices, comportant des données dites données utilisateur. La mise en œuvre de cette deuxième approche est difficile pour les réseaux de communication chiffrés. Les solutions connues sont dédiées à des protocoles de transport spécifiques, par exemple TCP pour IPSec (« Internet Protocol Security ») et uniquement dans le mode de communication d'équipement à équipement (ou « host-to-host » en anglais), dans lequel la transmission se fait entre deux équipements hôtes ayant des adresses IP données qui établissent une session de communication.

L'invention a pour but de proposer un procédé de mesure d'un paramètre représentatif d'un temps de transmission dans un tunnel de communication chiffré s'appliquant plus généralement pour un trafic entre des sous-réseaux.

A cet effet, l'invention propose un procédé de mesure d'un paramètre représentatif d'un temps de transmission dans un tunnel de communication chiffré adapté à transporter des données chiffrées dans des paquets sur un réseau de communications ouvert, entre un premier réseau fermé et un deuxième réseau fermé, le transport mettant en œuvre au moins un protocole de transport ayant une signature de signalisation protocolaire associée, ladite signature comportant une séquence prédéterminée de paquets dits paquets de signature. Ce procédé comporte des étapes, mises en œuvre par un processeur d'un dispositif de mesure d'un paramètre représentatif d'un temps de transmission, de :
- pour chaque paquet d'une pluralité de paquets successifs transportés dans ledit tunnel de communication chiffré, obtention sans déchiffrage de métadonnées associées audit paquet,
- pour au moins un protocole de communications, détermination, à partir desdites métadonnées associées à chaque paquet et de caractéristiques mémorisées des paquets de signature faisant partie de la signature de signalisation protocolaire dudit protocole de communications, d'au moins une séquence de paquets susceptible de former une signature de signalisation protocolaire selon ledit protocole de communications,
- estimation d'un paramètre représentatif d'un temps de transmission à partir d'au moins une séquence de paquets déterminée.

Avantageusement, l'invention permet d'estimer un paramètre représentatif d'un temps de transmission dans un tunnel de communication chiffré entre sous-réseaux, y compris lorsque le trafic comprend plusieurs sessions différentes entre équipements hôtes différents.

Le procédé de mesure d'un paramètre représentatif d'un temps de transmission selon l'invention peut également présenter une ou plusieurs des caractéristiques ci-dessous, prises indépendamment ou selon toutes les combinaisons techniquement envisageables.

Pour chaque paquet, lesdites métadonnées comportent une taille de paquet, une date d'arrivée du paquet, une adresse d'équipement source et une adresse d'équipement destinataire.

Les caractéristiques mémorisées des paquets de signature comportent le nombre N de paquets formant la signature de signalisation protocolaire, une taille minimale et une taille maximale de chaque paquet de signature, l'étape de détermination comportant une sélection d'un sous-ensemble des paquets dont la taille est comprise entre la taille minimale et la taille maximale d'au moins un des paquets de signature.

Les caractéristiques mémorisées des paquets de signature comportent en outre une direction de communication de chaque paquet, l'étape de détermination comportant en outre une extraction, parmi les paquets dudit sous-ensemble, d'une séquence de paquets respectant les caractéristiques de taille et de direction de communication mémorisées.

Le procédé comporte, suite à l'estimation d'un temps de transmission, une mise à jour d'une durée de fenêtre temporelle maximale entre deux paquets successifs.

L'étape de détermination d'une séquence de paquets comporte une vérification d'un respect d'une durée temporelle entre deux paquets successifs de la séquence, comportant un calcul d'un délai temporel entre dates d'arrivée desdits paquets successifs et une comparaison dudit délai à la durée de fenêtre temporelle maximale.

Le paramètre représentatif d'un temps de transmission est une latence de transmission entre un équipement du premier réseau fermé et un équipement du deuxième réseau fermé, ou un temps d'aller-retour d'un paquet, ou une gigue de ladite latence de transmission.

Les métadonnées comportent un champ indicatif d'un type de trafic, le procédé comportant une détermination de type de trafic suite à la détermination d'une séquence de paquets susceptibles de former une signature de signalisation protocolaire, et une estimation d'un temps de transmission dans un tunnel de communication chiffré par type de trafic.

Selon un autre aspect, l'invention concerne un dispositif de mesure d'un paramètre représentatif d'un temps de transmission un tunnel de communication chiffré adapté à transporter des données chiffrées dans des paquets sur un réseau de communications ouvert, entre un premier réseau fermé et un deuxième réseau fermé, le transport mettant en œuvre au moins un protocole de transport ayant une signature de signalisation protocolaire associée, ladite signature comportant une séquence prédéterminée de paquets dits paquets de signature. Ce dispositif comporte un processeur configuré pour mettre en œuvre:
- pour chaque paquet d'une pluralité de paquets successifs transportés dans ledit tunnel de communication chiffré, un module d'obtention sans déchiffrage de métadonnées associées audit paquet,
- pour au moins un protocole de communications, un module de détermination, à partir desdites métadonnées associées à chaque paquet et de caractéristiques mémorisées des paquets de signature faisant partie de la signature de signalisation protocolaire dudit protocole de communications, d'au moins une séquence de paquets susceptible de former une signature de signalisation protocolaire selon ledit protocole de communications,
- un module estimation d'un paramètre représentatif d'un temps de transmission à partir d'au moins une séquence de paquets déterminée.

Selon un autre aspect, l'invention concerne un support d'enregistrement d'informations, sur lequel sont mémorisées des instructions logicielles pour l'exécution d'un procédé de mesure d'un paramètre représentatif d'un temps de transmission tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont mises en œuvre par un dispositif électronique programmable, mettent en œuvre un de mesure d'un paramètre représentatif d'un temps de transmission tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
- [Fig 1] la figure 1 est représentation schématique d'un système de communications comportant un dispositif de mesure d'un paramètre représentatif du temps de transmission selon un mode de réalisation ;
- [Fig 2] la figure 2 est un synoptique des principaux blocs fonctionnels d'un dispositif de mesure d'un paramètre représentatif du temps de transmission selon un mode de réalisation ;
- [Fig 3] la figure 3 est un logigramme des principales étapes de la détermination de séquences de signature dans le cas du protocole de transport TCP ;
- [Fig 4] la figure 4 est un logigramme des principales étapes de la détermination de séquences de signature dans le cas d'un protocole de transport quelconque.

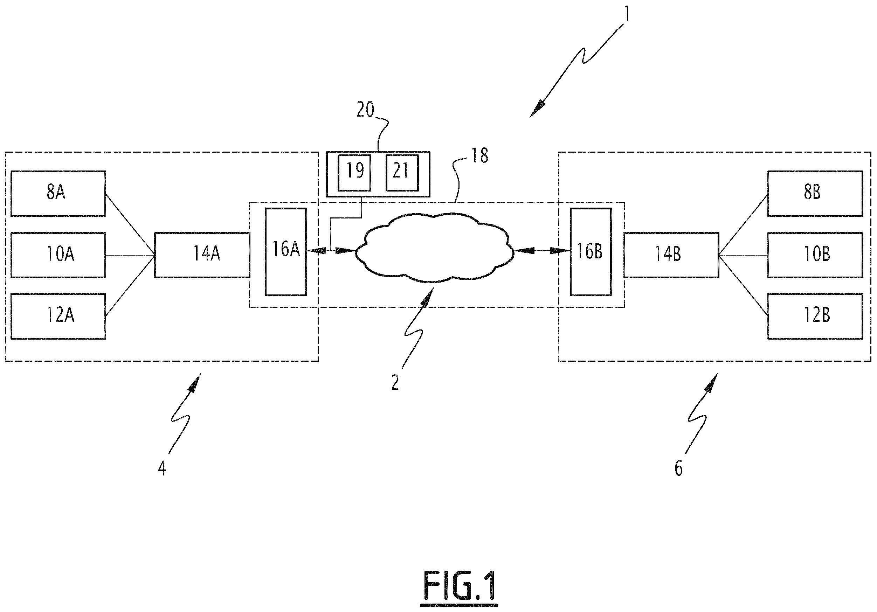

La figure 1 illustre schématiquement un système de communications 1 comportant plusieurs réseaux de communications interconnectés. Le système 1 comporte un réseau de communications ouvert 2 ou WAN (pour « *Wide Area Network* »), par exemple le réseau Internet, et deux réseaux de communication 4 et 6 fermés de type LAN (« *Local Area Network »).*

Chacun des réseaux fermés 4, 6 comporte une pluralité d'équipements 8A, 8B, 10A, 10B, 12A, 12B adaptés à communiquer à l'intérieur du réseau fermé auquel ils appartiennent. Il s'agit d'équipements connectés quelconques, ordinateurs clients ou serveurs, équipements périphériques, tablettes etc. qui ont été représentés schématiquement.

Un ou plusieurs protocoles de communication, standardisés ou propriétaires, sont mis en œuvre dans chacun des réseaux fermés 4, 6.

Chacun des réseaux fermés 4, 6 comporte en outre un dispositif de chiffrement 14A, 14B configuré pour chiffrer les données sortantes du réseau fermé et pour déchiffrer les données entrantes, afin de garantir la sécurité et l'intégrité des données lorsqu'elles sont transportées sur le réseau de communication ouvert 2.

Dans un mode de réalisation, chaque dispositif de chiffrement 14A, 14B met en œuvre un chiffrement selon le protocole standardisé IPSec (« *Internet Protocol Security»*)*,* défini par l'IETF (« *Internet Engineering Taskforce* »), pour assurer des communications privées et protégées sur des réseaux utilisant le protocole IP, par l'utilisation des services de sécurité cryptographiques.

Le protocole IPSec intervient au niveau de la couche réseau qui est la couche 3 du modèle OSI (« Open Systems Inteconnexion »), indépendamment des applications de la couche applicative.

On désigne par protocole IP une famille de protocoles de communication utilisés pour le transfert de données sur Internet, encapsulées dans des paquets. Le protocole IPSec est compatible avec IPv4 et avec IPv6.

Le dispositif de chiffrement 14 met en œuvre un chiffrement des paquets formés selon le protocole IP (e.g. IPv4 ou IPV6), permettant d'obtenir des données chiffrées qui sont encapsulées dans des paquets de communication comprenant des en-têtes selon un protocole de communication donné.

Les en-têtes comportent notamment des champs indiquant une adresse d'équipement réseau source, dite adresse réseau source, une adresse d'équipement réseau destinataire, dite adresse réseau destinataire, et une taille de paquet, par exemple en nombre d'octets.

Un protocole de transport, par exemple TCP ou UDP, encapsule des données utiles dans des segments ou datagrammes de transport.

Les paquets de communication, appelés simplement paquets par la suite, comprenant des données chiffrées, sont transmis sur le réseau 2 par des équipements routeurs 16A, 16B.

Ainsi le protocole de communication chiffré (IPsec dans l'exemple) permet la mise en œuvre d'un tunnel de communications 18 chiffré entre le premier réseau 4 et le deuxième réseau 6, en particulier entre des équipements distincts de chacun des réseaux 4, 6, chaque équipement ayant une adresse réseau ou adresse IP propre.

Un tunnel de communication 18 entre deux réseaux distincts permet également de véhiculer des données issues de plusieurs sessions de communication.

Le terme session de communication désigne une période pendant laquelle deux équipements vont réaliser une communication. Une session comprend une phase d'ouverture, une phase d'échange et une phase de fermeture (qui peut être implicite par exemple en cas de déconnexion d'un des équipements ou bien au bout d'un temps d'inactivité prédéfini).

Dans un exemple d'application non exhaustif, plusieurs types de sessions de communication sont ouverts sur le tunnel de communications chiffré 18 : une première session de communication de données vidéo, utilisant le protocole de transport TCP (« *Transmission Control Protocol* »), et une deuxième session de communication de la voix de type VoIP (« *Voice Over IP* »), utilisant un protocole de transport SIP (« *Session Initiation Protocol »).*

Chaque protocole de transport a une signature de signalisation protocolaire, formée d'une séquence de paquets de format prédéfini, qu'on appellera par la suite paquets de signature, à échanger entre un premier équipement et un deuxième équipement pour établir une session de communication entre ces équipements. En général, des paquets successifs d'une signature de signalisation ont des directions alternées.

Par exemple, pour le protocole de transport TCP, la signature de signalisation protocolaire est une séquence de paquets SYN - SYN/ACK - ACK :
- le premier équipement envoie au deuxième équipement un paquet de type SYN de demande de synchronisation/établissement de connexion ;
- à réception, le deuxième équipement envoie au premier équipement un accusé de réception (paquet SYN/ACK) du paquet SYN ;
- à réception du paquet SYN/ACK, le premier équipement envoie au deuxième équipement un paquet d'accusé de réception ACK.

Cet enchaînement, également connu sous le nom de « handshake » en anglais, est bien connu pour le protocole de transport TCP.

Les paquets ACK, SYN/ACK et SYN faisant partie de cette signature de signalisation protocolaire pour le protocole de transport TCP sont des paquets qui ne transportent pas de données utiles.

De manière plus générale, une signature de signalisation protocolaire est constituée d'une séquence de N paquets de signature {P₁,.. ,P_{N}}.

Chaque signature de signalisation protocolaire est caractérisée par un ensemble de caractéristiques, qui comportent notamment : le nombre N de paquets formant la signature de signalisation protocolaire, une taille minimale et une taille maximale de chaque paquet de signature, la direction de communication de chaque paquet, ainsi qu'une durée temporelle maximale entre deux paquets successifs.

Le système 1 comporte en outre un dispositif 20 de mesure d'un paramètre représentatif d'un temps de transmission dans le tunnel de communication chiffré, connecté à proximité de la sortie du dispositif de chiffrement 14A. En variante, le dispositif 20 est connecté à proximité de la sortie du dispositif 14B.

Le terme proximité est à entendre ici au sens de la latence entre le dispositif 20 et le dispositif de chiffrement 14A, 14B. Par exemple, deux dispositifs sont considérés proches si la latence est inférieure ou égale à 5ms.

Dans une autre variante, le dispositif 20 est intégré dans le dispositif routeur 16A, ou dans le dispositif routeur 16B.

Le dispositif 20 est configuré pour mettre en œuvre un procédé de mesure d'un paramètre représentatif d'un temps de transmission dans un tunnel de communication chiffré 18 selon les divers modes de réalisation de l'invention.

Le dispositif 20 est par exemple un dispositif électronique de calcul, par exemple un ordinateur, comprenant au moins un processeur de calcul 19 et au moins une mémoire électronique 21, adaptés à communiquer via un bus de communication.

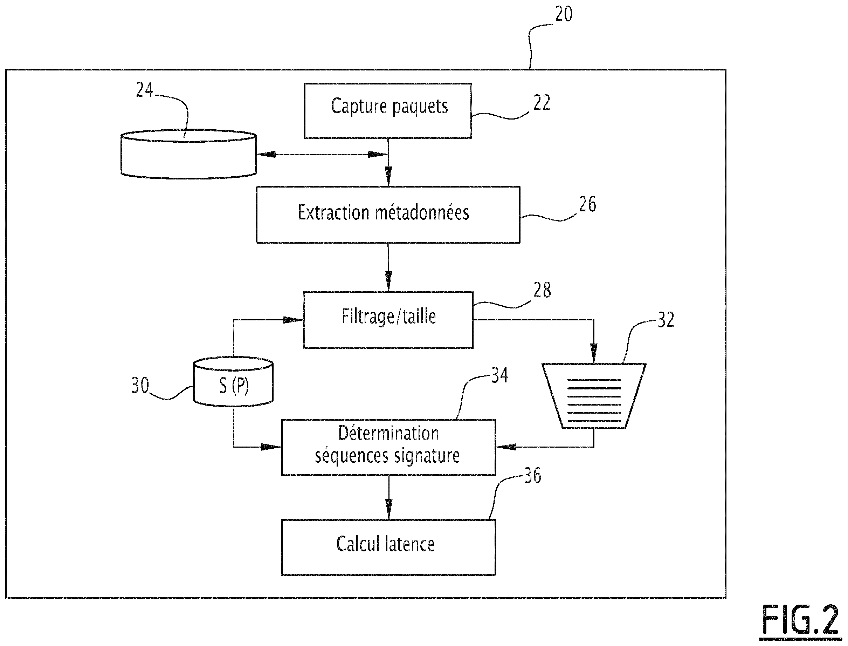

La figure 2 illustre schématiquement les principaux blocs fonctionnels d'un dispositif 20.

Le dispositif 20 comporte un module 22 de capture au fur et à mesure des paquets de communication transitant par le routeur à proximité duquel est branché le dispositif 20, comprenant des données utiles chiffrées circulant dans le tunnel de communication chiffré 18.

L'ensemble des paquets capturés comporte la totalité du trafic entre le premier réseau fermé 4 et le deuxième réseau fermé 6, c'est-à-dire les paquets transmis du premier réseau fermé 4 vers le deuxième réseau fermé 6, et vice versa, les paquets transmis du deuxième réseau fermé 6 vers le premier réseau fermé 4.

Bien entendu, la capture des paquets est effectuée sans induire de retard de transmission, donc en d'autres termes sans augmenter la latence dans le tunnel de communications.

De plus, l'ensemble des paquets capturés comporte des paquets formatés selon différents protocoles de communication, et appartenant à différentes sessions de communication.

Les paquets capturés sont temporairement mémorisés dans leur ordre d'arrivée dans unité de mémoire 24 du dispositif 20.

Le dispositif 20 comprend en outre un module 26 d'extraction de métadonnées relatives aux paquets chiffrés capturés, configuré pour mettre en œuvre une étape d'obtention de métadonnées pour chaque paquet d'une pluralité de paquets successifs, décrite en détail ci-après.

Les métadonnées extraites des en-têtes des paquets comprennent d'une part une indication du protocole de communication (IPsec dans l'exemple) selon lequel est formaté le paquet. L'indication de protocole permet un filtrage des paquets, seuls les paquets formatés selon un ensemble de protocoles prédéterminés étant retenus.

Dans un mode de réalisation, tous les paquets non-IP sont rejetés. On peut citer par exemple les paquets ARP (« Address Resolution Protocol ») que les dispositifs de chiffrement 14A et 14B s'échangent périodiquement.

Pour les paquets selon le protocole IP (IPv4 ou IPv6), les métadonnées extraites comportent en outre, pour chaque paquet traité :
- la taille du paquet,
- une indication relative à un type de trafic (champ DSCP pour IPv6 ou ToS pour IPv4),
- adresse IP source et adresse IP destination.

De plus, les métadonnées extraites comportent également, dans un mode de réalisation, un index de paramètre de sécurité (SPI), et un numéro de séquence IPsec. L'index SPI indique un numéro de tunnel de communication. Le numéro de séquence IPsec est utilisé pour estimer un taux de perte dans le tunnel de communication.

De plus, la date d'arrivée (ou Timestamp en anglais) de chaque paquet sur le dispositif 20 qui implémente le procédé de l'invention est également mémorisée dans les métadonnées associées à un paquet.

Les métadonnées associées à chaque sont mémorisées, par exemple en lien avec un identifiant de paquet. Les autres données des paquets capturés (autre données d'entête ou données utilisateur) ne sont pas maintenues en mémoire.

Le dispositif 20 comporte également un module 28 de filtrage des paquets en fonction de leur taille, en lien avec, pour chaque protocole de transport considéré, une signature de signalisation protocolaire du protocole de transport.

Chaque paquet de signature a une taille comprise entre une taille minimale et une taille maximale prédéterminées. Les caractéristiques du ou des paquets de chaque signature de signalisation protocolaire S(P) sont mémorisées, par exemple dans une unité de mémoire 30 du dispositif 20.

Par exemple, pour le protocole TCP, la signature de signalisation protocolaire est formée de N=3 paquets de signature SYN, SYN/ACK et ACK, comme décrit ci-dessus. Les paquets SYN ont une taille comprise entre 70 et 75 octets, les paquets SYN/ACK ont une taille comprise entre 70 et 75 octets, et les paquets ACK ont une taille comprise entre 60 et 70 octets. Les directions de communication sont respectivement : une première direction de communication de l'équipement source vers l'équipement destinataire, et une deuxième direction de communication de l'équipement destinataire vers l'équipement source.

Le module 28 de filtrage sélectionne uniquement métadonnées associées à des paquets dont la taille est compatible avec la taille des paquets de signature du ou des protocole(s) de transport considéré(s).

Les paquets retenus forment un sous-ensemble de paquets, et les métadonnées associées sont rangées dans une liste ou une file d'attente 32, qui les fournit selon un ordre « premier arrivé, premier sorti », également appelé FIFO (pour « first in, first out »), à un module 34 de détermination des séquences de paquets qui vérifient toutes les caractéristiques d'une signature de signalisation protocolaire.

Selon un mode de réalisation alternatif, le module 28 de filtrage est omis, et l'ensemble des métadonnées de tous les paquets reçu est fourni au module 34 de détermination de séquences de paquets.

Ces séquences de paquets sont fournies à un module 36 de calcul de latence, ou plus généralement d'un paramètre représentatif d'un temps de transmission.

Le module 36 calcule par exemple un temps de transmission entre le dispositif 20 et le routeur 16B.

Dans le cas où plusieurs protocoles de transport sont considérés, il est envisagé, dans un mode de réalisation, de mettre en œuvre plusieurs modules 34 et 36 en parallèle, chaque module étant destiné à déterminer des séquences de paquets de signature pour un protocole donné.

Les modules de capture de paquets 22, d'extraction de métadonnées 26, de filtrage 28, de détermination de séquence de paquets de signature 34 et de calcul 36 d'un paramètre représentatif d'un temps de transmission sont par exemple réalisés chacun sous forme d'un logiciel, ou d'une brique logicielle exécutable par le processeur 19 du dispositif 20.

La mémoire 21 du dispositif 20 est alors apte à stocker un logiciel de mesure d'un paramètre représentatif d'un temps de transmission selon l'invention, et le processeur 19 est alors apte à exécuter ce logiciel.

Ce logiciel est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

En variante non représentée, les modules de capture de paquets 22, d'extraction de métadonnées 26, de filtrage 28, de détermination de séquence de paquets de signature 34 et de calcul 36 d'un paramètre représentatif d'un temps de transmission sont réalisés chacun sous forme d'un composant logique programmable, tel qu'un FPGA (de l'anglais *Field Programmable Gate Array*), un GPU (processeur graphique) ou un GPGPU (de l'anglais General-purpose processing on graphics processing), ou encore sous forme d'un circuit intégré dédié, tel qu'un ASIC (de l'anglais *Application Specific Integrated Circuit).*

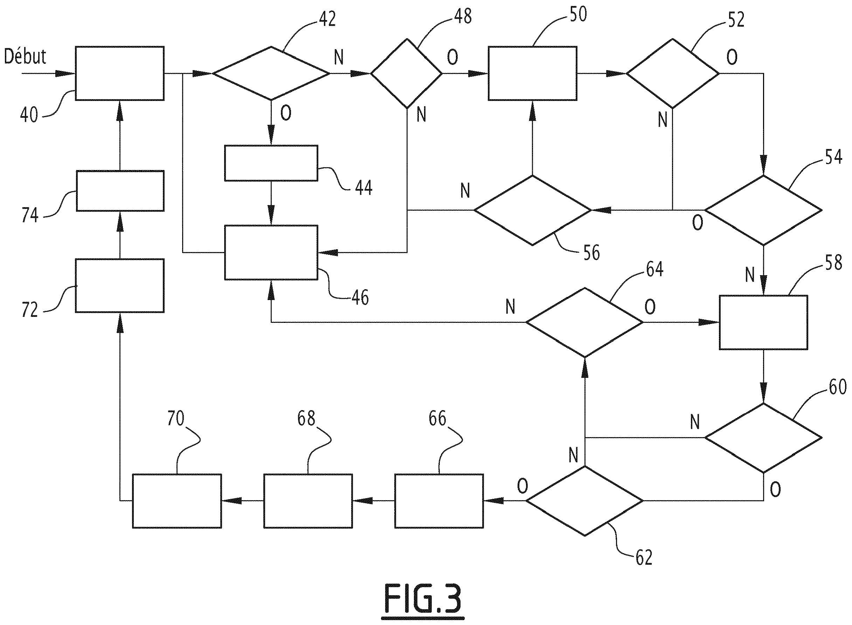

La figure 3 est un synoptique des principales étapes d'un procédé de mesure d'un paramètre représentatif d'un temps de transmission dans un tunnel de communication chiffré pour le protocole de transport TCP, dont la signature de signalisation protocolaire comporte une séquence de paquets SYN, SYN/ACK et ACK comme décrit ci-dessus.

Lors d'une première étape 40, un premier paquet A est extrait de la file d'attente 32, et il est vérifié (étape 42) si la durée temporelle entre sa date d'arrivée T_{A} et la date courante Timec est supérieure à une durée de fenêtre maximale Tw prédéterminée.

Par exemple, la durée de fenêtre Tw est comprise entre 0 et 200 ms pour TCP.

En cas de vérification positive, le premier paquet A est considéré obsolète et il n'est pas retenu dans le sous-ensemble de paquets (étape 44). Un prochain paquet est sélectionné à l'étape 46 en tant que premier paquet A, et l'étape de vérification 42 est à nouveau effectuée.

Si la vérification de l'étape 42 est négative, donc si la date d'arrivée du premier paquet A est inférieure à la durée de la fenêtre temporelle considérée, alors l'étape 42 est suivie d'une étape 48 pour déterminer si le premier paquet A est susceptible d'être un paquet SYN, via la comparaison de la taille du premier paquet A aux tailles minimale et maximale d'un paquet de type SYN, premier paquet de la signature de signalisation protocolaire TCP.

Si la taille du premier paquet A, notée L_{A}, n'est pas comprise entre 70 et 75 octets, le premier paquet A n'est pas susceptible d'être un paquet SYN, et l'étape 48 est suivie de l'étape 46 précédemment décrite de sélection du paquet suivant en tant que premier paquet.

Si la taille L_{A} du premier paquet A est comprise entre 70 et 75 octets, le paquet A est mémorisé comme paquet susceptible d'être un premier paquet de signature dans une séquence de paquets, et l'étape 48 est suivie d'une étape 50 de sélection d'un paquet suivant en tant que deuxième paquet B.

L'étape 50 est suivie d'une étape 52 pour déterminer si le deuxième paquet B est susceptible d'être un paquet SYN/ACK, via la comparaison de la taille L_{B} du deuxième paquet B aux tailles minimale et maximale d'un paquet de type SYN/ACK, deuxième paquet de la signature de signalisation protocolaire TCP.

Si la taille L_{B} du deuxième paquet B n'est pas comprise entre 70 et 75 octets, le deuxième paquet B n'est pas susceptible d'être un paquet SYN/ACK, et l'étape 52 est suivie d'une étape 56 de vérification du délai entre la date d'arrivée T_{B} du deuxième paquet B et la date d'arrivée T_{A} du premier paquet A préalablement sélectionné.

Si le délai (T_{B}-T_{A}) est supérieur ou égal à la durée de fenêtre T_{W} prédéterminée, alors l'étape 56 est suivie de l'étape 46 préalablement décrite consistant à sélectionner un paquet suivant susceptible d'être un premier paquet.

Si le délai (T_{B}-T_{A}) est inférieur à la durée de fenêtre Tw prédéterminée, l'étape 56 est suivie de l'étape 50 préalablement décrite de sélection d'un paquet suivant en tant que deuxième paquet B.

Si la taille L_{B} du deuxième paquet B est comprise entre 70 et 75 octets, le deuxième paquet B est susceptible d'être un paquet SYN/ACK, et l'étape 52 est suivie d'une étape 54 de vérification des directions de communication respectives du premier paquet A préalablement sélectionné et du deuxième paquet B, en fonction des adresses source et destination des métadonnées mémorisées.

En effet, si le premier paquet A et le deuxième paquet B sont transmis dans la même direction de communication, ils ne sont pas susceptibles d'être des paquets consécutifs de la séquence de paquets de signature. L'étape 54 est alors suivie de l'étape 56 préalablement décrite.

Si le premier paquet A et le deuxième paquet B ont des directions de communication associées opposées, alors le deuxième paquet B est retenu comme deuxième paquet d'une séquence de signature, et l'étape 54 est suivie d'une étape 58 de sélection d'un paquet suivant en tant que troisième paquet C.

L'étape 58 est suivie d'une étape 60 pour déterminer si le troisième paquet C est susceptible d'être un paquet ACK, via la comparaison de la taille Le du troisième paquet C aux tailles minimale et maximale d'un paquet de type ACK, troisième paquet de la signature de signalisation protocolaire TCP.

Si la taille Le du troisième paquet C n'est pas comprise entre 60 et 70 octets, le troisième paquet C n'est pas susceptible d'être un paquet ACK, et l'étape 60 est suivie d'une étape 64 de vérification du délai entre la date d'arrivée T_{C} du troisième paquet C et la date d'arrivée T_{B} du deuxième paquet B préalablement sélectionné.

Si le délai (T_{C}-T_{B}) est supérieur ou égal à la durée de fenêtre T_{W} prédéterminée, alors l'étape 64 est suivie de l'étape 46 préalablement décrite consistant à sélectionner un paquet suivant susceptible d'être un premier paquet.

Si le délai (T_{C}-T_{B}) est inférieur à la durée de fenêtre T_{W} prédéterminée, l'étape 64 est suivie de l'étape 58 préalablement décrite.

Si la taille L_{C} du troisième paquet C est comprise entre 60 et 70 octets, le troisième paquet C est susceptible d'être un paquet ACK, et l'étape 60 est suivie d'une étape 62 de vérification des directions de communication respectives du deuxième paquet B préalablement sélectionné et du troisième paquet C, en fonction des adresses source et destination des métadonnées mémorisées.

Si les paquets sont transmis dans la même direction, alors l'étape 62 est suivie de l'étape 64 préalablement décrite.

Si le deuxième paquet B et troisième paquet C ont des directions de communication opposées, alors ils forment une séquence de paquets susceptible de former une signature de signalisation protocolaire selon ledit protocole de communications, c'est-à-dire dont les paquets vérifient les contraintes de taille, de délai de communication et de direction de communication de la signature.

L'étape 62 est suivie d'une étape 66 de sélection de la séquence de paquets A, B et C, puis d'une étape 68 d'estimation d'un paramètre représentatif d'un temps de transmission à partir des dates d'arrivée T_{A}, T_{B}, T_{C} des paquets A, B, C de la séquence de paquets obtenue. Par exemple, à l'étape 68 on calcule une valeur de latence ou une valeur de temps d'aller-retour. (RTT)

L'étape 68 est suivie d'une étape 70 de mise à jour de l'estimation globale du paramètre représentatif de la durée de transmission dans le tunnel chiffré. Par exemple, plusieurs valeurs de latence sont cumulées, et la mise à jour globale consiste à calculer une valeur moyenne de l'ensemble de ces valeurs cumulées.

L'étape 72 permet de mettre à jour une valeur moyenne glissante sur les dernières K valeurs, K étant un entier positif supérieur à 1 choisi. Lorsque K est proche de 1, les valeurs estimées sont proches de l'instantané, et lorsque K est grand, les pics de latence sont lissés sur la durée globale d'estimation. Dans un mode de réalisation, par exemple K est compris entre 1 et 15.

Ensuite la fenêtre temporelle utilisée est mise à jour à l'étape 74, et en particulier, la durée temporelle T_{W} est mise à jour en fonction de la latence calculée. Par exemple la fenêtre va s'adapter pour restreindre la recherche à plus ou moins M% de la dernière valeur estimée afin d'améliorer les performances, M étant par exemple plus ou moins 10% de la valeur estimée. La fenêtre est périodiquement remise à sa valeur initiale afin de s'adapter aux changements brusques et importants de latence.

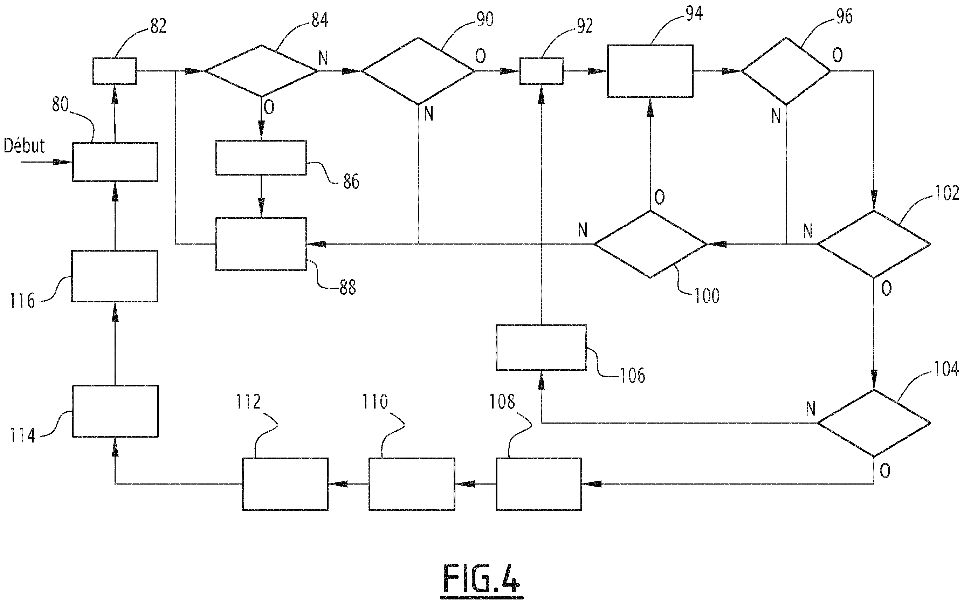

La figure 4 est un synoptique des principales étapes d'un procédé de mesure d'un paramètre représentatif d'un temps de transmission dans un tunnel de communication chiffré générique, pour un protocole de transport quelconque, dont la signature de signalisation protocolaire comporte N paquets {P₁,...,P_{N}}. Les caractéristiques de la signature en termes de tailles minimale et maximale de chacun des paquets de la signature, de délai maximal entre paquets et d'alternance entre directions de communications des paquets sont préalablement mémorisées.

Le procédé comporte une première étape 80 de sélection d'un premier paquet A, un indice de paquet n étant initialisé à 1 à l'étape 82.

Ensuite l'étape 82 est suivie d'une étape 84, analogue à l'étape 42 de la figure 3, dans laquelle il est vérifié si le premier paquet sélectionné n'est pas obsolète, en fonction de sa date d'arrivée.

A l'étape 84 il est vérifié si la durée temporelle entre sa date d'arrivée T_{A} et la date courante Time_{C} est supérieure à une durée de fenêtre T_{W} prédéterminée.

En cas de vérification positive, le paquet sélectionné n'est pas retenu (étape 86) et un paquet suivant est sélectionné à l'étape 88 en tant que paquet A, et l'étape de vérification 84 est à nouveau effectuée.

Si la vérification de l'étape 84 est négative, alors elle est suivie d'une étape 90 pour déterminer si le paquet A est susceptible d'être le n^{ième} paquet de signature, donc si sa taille est bien comprises entre les tailles minimale et maximale d'un n^{ième} paquet de signature. Si ce n'est pas le cas, l'étape 90 est suivie de l'étape 88 préalablement décrite.

Si la taille du paquet A est compatible, alors l'étape 90 est suivie d'une étape 92 d'incrémentation de l'indice n de paquet de signature : n<-n+1.

Un paquet B suivant est sélectionné dans la file des paquets à traiter (étape 94), et il est vérifié à l'étape 96 si le paquet B est susceptible d'être le n^{ième} paquet de signature. En d'autres termes, il est vérifié si le paquet B est susceptible d'être le paquet suivant le paquet A préalablement retenu dans la séquence de paquets de signature du protocole considéré.

En cas de vérification négative à l'étape 96, il est vérifié à l'étape 100 si le délai temporel entre la date d'arrivée du paquet B et la date d'arrivée du paquet A est inférieure à la durée de fenêtre T_{W} prédéterminée. Si le délai est supérieur, l'étape 100 est suivie de l'étape 88 précédemment décrite de sélection d'un paquet A, et l'indice de paquet n est réinitialisé à 1.

Si le délai calculé à l'étape 100 est inférieur à la durée de fenêtre Tw, alors l'étape 100 est suivie de l'étape 94 précédemment décrite.

Si la taille du paquet B est compatible avec la taille du nième paquet de signature, l'étape 96 est suivie d'une étape 102 de vérification de la compatibilité des directions de communication des paquets A et B en tant que paquets successifs Pₙ₋₁ et Pₙ dans la signature.

En cas de vérification négative, l'étape 102 est suivie de l'étape 100 précédemment décrite.

En cas de vérification positive, en d'autres termes si les directions de communication des paquets A et B sont compatibles avec les directions des paquets de signature successifs Pₙ₋₁ et Pₙ, l'étape 102 est suivie d'une étape 104 de vérification de complétude la séquence de paquets susceptible d'être une séquence de paquets de signature. En pratique, n est comparé à N.

Si n est strictement inférieur à N, l'étape 104 est suivie d'une étape 106 dans laquelle le paquet A est enregistré dans la séquence de paquets de signature. Le paquet B est considéré comme paquet A pour les étapes suivantes, et l'étape 106 est suivie de l'étape 92 d'incrémentation de l'indice n de paquet.

Si n est égal à N, l'étape 104 est suivie d'une étape 106 d'extraction de la séquence des paquets mémorisés successivement en tant que paquets de signature de la file d'attente (étape 108), et d'estimation 110 d'un paramètre représentatif d'un temps de transmission à partir des dates d'arrivées des paquets retenus. L'étape 110 est analogue à l'étape 68 préalablement décrite.

L'étape 110 est suivie d'une étape 112 de mise à jour de l'estimation globale du paramètre représentatif de la durée de transmission dans le tunnel chiffré, analogue à l'étape 70 décrite en référence à la figure 3, d'une étape 114 de mise à jour de la moyenne glissante analogue à l'étape 72, puis d'une étape 116 de mise à jour de la fenêtre temporelle, analogue à l'étape 74.

Avantageusement, l'invention permet une estimation d'un paramètre représentatif du temps de transmission dans un tunnel de communication chiffré sans augmentation de trafic.

Avantageusement, l'invention permet en outre de déduire le type de trafic circulant dans le tunnel de communications chiffré, et d'estimer un paramètre représentatif d'un temps de transmission dans un tunnel de communication chiffré en lien avec le type de trafic. En effet, l'extraction d'une séquence de paquets susceptible de former une signature de signalisation protocolaire permet de déduire que le protocole correspondant fait partie du trafic capturé. De plus, dans le cas où les métadonnées extraites comportent un champ DCSP ou ToS, un type de trafic est associé à chaque séquence de paquets déterminée. Il est alors possible d'effectuer une mesure d'un paramètre représentatif d'un temps de transport, par exemple un temps de latence, par type de trafic. Cela permet d'effectuer ensuite des optimisations sur la transmission dans le réseau de communications ouvert par type de trafic.

## Revendications

1. Procédé de mesure d'un paramètre représentatif d'un temps de transmission dans un tunnel de communication chiffré (18) adapté à transporter des données chiffrées dans des paquets sur un réseau de communications (2) ouvert, entre un premier réseau fermé (4) et un deuxième réseau fermé (6), le transport mettant en œuvre au moins un protocole de transport ayant une signature de signalisation protocolaire associée, ladite signature comportant une séquence prédéterminée de paquets dits paquets de signature,
**caractérisé en ce qu'**il comporte des étapes, mises en œuvre par un processeur d'un dispositif de mesure d'un paramètre représentatif d'un temps de transmission, de :
- pour chaque paquet d'une pluralité de paquets successifs transportés dans ledit tunnel de communication chiffré, obtention sans déchiffrage de métadonnées associées audit paquet,
- pour au moins un protocole de communications, détermination (40-66 ; 80-108), à partir desdites métadonnées associées à chaque paquet et de caractéristiques mémorisées des paquets de signature faisant partie de la signature de signalisation protocolaire dudit protocole de communications, d'au moins une séquence de paquets susceptible de former une signature de signalisation protocolaire selon ledit protocole de communications,
- estimation (68, 110) d'un paramètre représentatif d'un temps de transmission à partir d'au moins une séquence de paquets déterminée.

2. Procédé selon la revendication 1, dans lequel, pour chaque paquet, lesdites métadonnées comportent une taille de paquet, une date d'arrivée du paquet, une adresse d'équipement source et une adresse d'équipement destinataire.

3. Procédé selon la revendication 2, dans lequel lesdites caractéristiques mémorisées des paquets de signature comportent le nombre N de paquets formant la signature de signalisation protocolaire, une taille minimale et une taille maximale de chaque paquet de signature, l'étape de détermination comportant une sélection d'un sous-ensemble des paquets dont la taille est comprise entre la taille minimale et la taille maximale d'au moins un des paquets de signature.

4. Procédé selon la revendication 3, dans lequel lesdites caractéristiques mémorisées des paquets de signature comportent en outre une direction de communication de chaque paquet, l'étape de détermination comportant en outre une extraction, parmi les paquets dudit sous-ensemble, d'une séquence de paquets respectant les caractéristiques de taille et de direction de communication mémorisées.

5. Procédé selon l'une quelconque des revendications 1 à 4, comportant, suite à l'estimation d'un temps de transmission, une mise à jour d'une durée de fenêtre temporelle maximale entre deux paquets successifs.

6. Procédé selon la revendication 5, dans lequel l'étape de détermination d'une séquence de paquets comporte une vérification d'un respect d'une durée temporelle entre deux paquets successifs de la séquence, comportant un calcul d'un délai temporel entre dates d'arrivée desdits paquets successifs et une comparaison dudit délai à la durée de fenêtre temporelle maximale.

7. Procédé selon l'une quelconque des revendications 1 à 6, dans lequel ledit paramètre représentatif d'un temps de transmission est une latence de transmission entre un équipement du premier réseau fermé et un équipement du deuxième réseau fermé, ou un temps d'aller-retour d'un paquet, ou une gigue de ladite latence de transmission.

8. Procédé selon l'une quelconque des revendications 1 à 6, dans lequel lesdites métadonnées comportent un champ indicatif d'un type de trafic, le procédé comportant une détermination de type de trafic suite à la détermination d'une séquence de paquets susceptibles de former une signature de signalisation protocolaire, et une estimation d'un temps de transmission dans un tunnel de communication chiffré par type de trafic.

9. Programme d'ordinateur comportant des instructions logicielles qui, lorsqu'elles sont mises en œuvre par un dispositif électronique programmable, mettent en œuvre un procédé de mesure d'un paramètre représentatif d'un temps de transmission dans un tunnel de communication chiffré conforme aux revendications 1 à 8.

10. Dispositif de mesure d'un paramètre représentatif d'un temps de transmission dans un tunnel de communication chiffré (18) adapté à transporter des données chiffrées dans des paquets sur un réseau de communications (2) ouvert, entre un premier réseau fermé (4) et un deuxième réseau fermé (6), le transport mettant en œuvre au moins un protocole de transport ayant une signature de signalisation protocolaire associée, ladite signature comportant une séquence prédéterminée de paquets dits paquets de signature,
**caractérisé en ce qu'**il comporte un processeur configuré pour mettre en œuvre:
- pour chaque paquet d'une pluralité de paquets successifs transportés dans ledit tunnel de communication chiffré, un module d'obtention (26) sans déchiffrage de métadonnées associées audit paquet,
- pour au moins un protocole de communications, un module de détermination (28, 34), à partir desdites métadonnées associées à chaque paquet et de caractéristiques mémorisées (S(P)) des paquets de signature faisant partie de la signature de signalisation protocolaire dudit protocole de communications, d'au moins une séquence de paquets susceptible de former une signature de signalisation protocolaire selon ledit protocole de communications,
- un module estimation (36) d'un paramètre représentatif d'un temps de transmission à partir d'au moins une séquence de paquets déterminée.

## Patentansprüche

1. Verfahren zum Messen eines Parameters, der für eine Übertragungszeit in einem verschlüsselten Kommunikationstunnel (18) repräsentativ ist, der angepasst ist, verschlüsselte Daten in Paketen über ein offenes Kommunikationsnetzwerk (2) zwischen einem ersten geschlossenen Netzwerk (4) und einem zweiten geschlossenen Netzwerk (6) zu transportieren, wobei der Transport mindestens ein Transportprotokoll implementiert, das eine zugehörige Protokollsignalisierungssignatur aufweist, wobei die Signatur eine vorbestimmte Folge von Paketen, genannt Signaturpakete, aufweist,
**dadurch gekennzeichnet, dass** es Schritte aufweist, die von einem Prozessor einer Vorrichtung zur Messung eines Parameters, der für eine Übertragungszeit repräsentativ ist, ausgeführt werden, die sind:
- für jedes einer Vielzahl von aufeinanderfolgenden Paketen, die in dem verschlüsselten Kommunikationstunnel übertragen werden, Erhalten von dem Paket zugeordneten Metadaten ohne Entschlüsselung,
- für mindestens ein Kommunikationsprotokoll, Bestimmen (40-66; 80-108), aus den jedem Paket zugeordneten Metadaten und gespeicherten Charakteristika von Signaturpaketen, die einen Teil der Protokollsignalisierungssignatur des Kommunikationsprotokolls bilden, mindestens einer Folge von Paketen, die eine Protokollsignalisierungssignatur gemäß dem Kommunikationsprotokoll bilden können,
- Schätzen (68, 110) eines Parameters, der für eine Übertragungszeit repräsentativ ist, aus mindestens einer bestimmten Folge von Paketen.

2. Verfahren nach Anspruch 1, bei dem die Metadaten für jedes Paket eine Paketgröße, ein Ankunftsdatum des Pakets, eine Adresse der Quelleneinrichtung und eine Adresse der Zieleinrichtung aufweisen.

3. Verfahren nach Anspruch 2, bei dem die gespeicherten Charakteristika der Signaturpakete die Anzahl N von Paketen, die die Protokollsignalisierungssignatur bilden, eine minimale Größe und eine maximale Größe jedes Signaturpakets aufweisen, wobei der Bestimmungsschritt das Auswählen einer Teilmenge der Pakete einschließt, deren Größe zwischen der minimalen Größe und der maximalen Größe von mindestens einem der Signaturpakete liegt.

4. Verfahren nach Anspruch 3, bei dem die gespeicherten Charakteristika der Signaturpakete ferner eine Kommunikationsrichtung jedes Pakets aufweisen, wobei der Bestimmungsschritt ferner das Extrahieren einer Folge von Paketen aus den Paketen der Teilmenge aufweist, die die gespeicherten Charakteristika der Größe und der Kommunikationsrichtung erfüllen.

5. Verfahren nach einem der Ansprüche 1 bis 4, bei dem nach dem Schätzen einer Übertragungszeit eine maximale Zeitfensterdauer zwischen zwei aufeinanderfolgenden Paketen aktualisiert wird.

6. Verfahren nach Anspruch 5, bei dem der Schritt des Bestimmens einer Folge von Paketen das Überprüfen der Einhaltung einer Zeitdauer zwischen zwei aufeinanderfolgenden Paketen der Folge aufweist, wobei ein Berechnen einer Zeitverzögerung zwischen Ankunftsdaten der aufeinanderfolgenden Pakete und ein Vergleichen der Verzögerung mit der maximalen Zeitfensterdauer umfasst ist.

7. Verfahren nach einem der Ansprüche 1 bis 6, bei dem der Parameter, der für eine Übertragungszeit repräsentativ ist, eine Übertragungslatenz zwischen einer Vorrichtung des ersten geschlossenen Netzwerks und einer Vorrichtung des zweiten geschlossenen Netzwerks oder eine Paketumlaufzeit oder ein Jitter der Übertragungslatenz ist.

8. Verfahren nach einem der Ansprüche 1 bis 6, bei dem die Metadaten ein Feld aufweisen, das einen Verkehrstyp anzeigt, wobei das Verfahren eine Bestimmung des Verkehrstyps im Anschluss an die Bestimmung einer Folge von Paketen, die geeignet ist, eine Protokollsignalisierungssignatur zu bilden, und eine Schätzung einer Übertragungszeit in einem nach Verkehrstyp verschlüsselten Kommunikationstunnel aufweist.

9. Rechnerprogramm, das Softwarebefehle aufweist, die, wenn sie von einer programmierbaren elektronischen Vorrichtung implementiert werden, ein Verfahren zum Messen eines Parameters durchführen, der für eine Übertragungszeit in einem verschlüsselten Kommunikationstunnel nach einem der Ansprüche 1 bis 8 repräsentativ ist.

10. Vorrichtung zum Messen eines Parameters, der für eine Übertragungszeit in einem verschlüsselten Kommunikationstunnel (18) repräsentativ ist, der angepasst ist, verschlüsselte Daten in Paketen über ein offenes Kommunikationsnetzwerk (2) zwischen einem ersten geschlossenen Netzwerk (4) und einem zweiten geschlossenen Netzwerk (6) zu transportieren, wobei der Transport mindestens ein Transportprotokoll implementiert, das eine zugehörige Protokollsignalisierungssignatur aufweist, wobei die Signatur eine vorbestimmte Folge von Paketen, genannt Signaturpakete, aufweist,
**dadurch gekennzeichnet, dass** sie einen Prozessor aufweist, der ausgebildet ist, durchzuführen:
- für jedes einer Vielzahl von aufeinanderfolgenden Paketen, die in dem verschlüsselten Kommunikationstunnel übertragen werden, ein Modul (26) zum Erhalten von dem Paket zugeordneten Metadaten ohne Entschlüsselung,
- für mindestens ein Kommunikationsprotokoll, ein Modul (28, 34) zum Bestimmen, aus den jedem Paket zugeordneten Metadaten und gespeicherten Charakteristika (S(P)) von Signaturpaketen, die einen Teil der Protokollsignalisierungssignatur des Kommunikationsprotokolls bilden, mindestens einer Folge von Paketen, die eine Protokollsignalisierungssignatur gemäß dem Kommunikationsprotokoll bilden können,
- ein Modul (36) zum Schätzen eines Parameters, der für eine Übertragungszeit repräsentativ ist, aus mindestens einer bestimmten Folge von Paketen.

## Claims

1. Method for measuring a parameter representative of a transmission time in an encrypted communication tunnel (18) adapted to transport encrypted data in packets on an open communication network (2) between a first closed network (4) and a second closed network (6), the transport implementing at least one transport protocol having an associated protocol signalling signature, said signature comprising a predetermined sequence of packets called signature packets,
**characterised in that** it comprises steps, carried out by a processor of a device for measuring a parameter representative of a transmission time, of:
- for each packet of a plurality of successive packets transported in said encrypted communication tunnel, obtaining, without decryption, metadata associated with said packet,
- for at least one communication protocol, determining (40-66; 80-108), from said metadata associated with each packet and from stored characteristics of the signature packets belonging to the protocol signalling signature of said communication protocol, at least one sequence of packets which can form a protocol signalling signature according to said communication protocol,
- estimating (68, 110) a parameter representative of a transmission time on the basis of at least one determined sequence of packets.

2. Method according to claim 1, wherein, for each packet, said metadata comprise a packet size, a timestamp of the packet, a source equipment address and a destination equipment address.

3. Method according to claim 2, wherein said stored characteristics of the signature packets comprise the number N of packets forming the protocol signalling signature, a minimum size and a maximum size of each signature packet, the determining step comprising selecting a sub-set of packets the size of which is between the minimum size and the maximum size of at least one of the signature packets.

4. Method according to claim 3, wherein said stored characteristics of the signature packets further comprise a communication direction of each packet, the determining step further comprising extracting, from the packets of said sub-set, a sequence of packets that comply with the stored size and communication direction characteristics.

5. Method according to any one of claims 1 to 4, comprising, following the estimation of a transmission time, updating a maximum time window duration between two successive packets.

6. Method according to claim 5, wherein the step of determining a sequence of packets comprises verifying compliance with a time duration between two successive packets of the sequence, which comprises calculating a time delay between timestamps of said successive packets and comparing said delay with the maximum time window duration.

7. Method according to any one of claims 1 to 6, wherein said parameter representative of a transmission time is a transmission latency between a piece of equipment of the first closed network and a piece of equipment of the second closed network, or a round-trip time of a packet, or a jitter of said transmission latency.

8. Method according to any one of claims 1 to 6, wherein said metadata comprise a field indicative of a traffic type, the method comprising determining the traffic type following the determination of a sequence of packets which can form a protocol signalling signature, and estimating a transmission time in an encrypted communication tunnel by traffic type.

9. Computer program comprising software instructions which, when they are implemented by a programmable electronic device, carry out a method for measuring a parameter representative of a transmission time in an encrypted communication tunnel according to claims 1 to 8.

10. Device for measuring a parameter representative of a transmission time in an encrypted communication tunnel (18) adapted to transport encrypted data in packets on an open communication network (2) between a first closed network (4) and a second closed network (6), the transport implementing at least one transport protocol having an associated protocol signalling signature, said signature comprising a predetermined sequence of packets called signature packets,
**characterised in that** it comprises a processor which is configured to implement:
- for each packet of a plurality of successive packets transported in said encrypted communication tunnel, a module for obtaining (26), without decryption, metadata associated with said packet,
- for at least one communication protocol, a module for determining (28, 34), from said metadata associated with each packet and from stored characteristics (S(P)) of the signature packets belonging to the protocol signalling signature of said communication protocol, at least one sequence of packets which can form a protocol signalling signature according to said communication protocol,
- a module for estimating (36) a parameter representative of a transmission time from at least one determined sequence of packets.
